# EUROPEAN PATENT APPLICATION

(11) **EP 3 627 410 A1**
(43) Date of publication of application: **25.03.2020**
(21) Application number: 19398010.9
(22) Date of filing: 17.09.2019
(51) Int. Cl.: G06Q 10/06

(54) **ENHANCED CONSISTENCY IN GEOLOGICAL RISK ASSESSMENT FOR DETECTING RECOVERABLE ACCUMULATIONS OF HYDROCARBONS THROUGH CONTINUOUS MACHINE LEARNING**

(30) Priority: 24.09.2018 US 201816139977
(71) Applicant: International Business Machines Corporation, Armonk, New York 10504 (US); Petrogal Brasil, S.A., 20031-170 Rio de Janeiro (BR)
(72) Inventor: Cersósimo, Dario Sergio, 1600 -209 Lisboa (PT); Ribeiro de Almeida, Joana de Noronha, 1600 -209 Lisboa (PT); Casacão, João Pedro, 1600 -209 Lisboa (PT); Libório, Carolina André, 1600 -209 Lisboa (PT); Fernandes, Susana de Lurdes Alves, 1600 -209 Lisboa (PT); Silva, Francisco José Cordeiro, 1600 -209 Lisboa (PT); Cerqueira, Renato Fontoura de Gusmão, 22290-240 Rio de Janeiro RJ (BR); Brandao, Rafael Rossi de Mello, 22290-240 Rio de Janeiro RJ (BR); Mendes, Carlos Raoni de Alencar, 22290-240 Rio de Janeiro RJ (BR); da Costa Flach, Bruno, 22290-240 Rio de Janeiro (BR)
(74) Representative: Arnaut, José Luis

(57) **Abstract**

Geological risk assessment includes receiving a first set of geological factors associated with a first site. Data pertaining to at least one second site with a second set of geological factors similar to first set of geological factors of the first site is retrieved. A comparison of the first set of geological factors to the second set of geological factors received, and a level of knowledge of the first site is determined based upon the comparison. A suggested probability of success for the first site is determined based upon the level of knowledge. A probability of success is determined for each of the geological factors of the second set of geological factors. A probability of success for the first site is determined. The probability of success of the first site is assessed based upon the level of knowledge of the first site, the suggested probability of success for the first site, and the probability of success for each of the second set of geological factors, thereby proving a determination of the probability of existence of a certain quantity of recoverable accumulated hydrocarbons in the referred first site.

## Description

### FIELD OF THE INVENTION

The present invention relates generally to a method, system, and computer program product for detection of hydrocarbons. More particularly, the present invention relates to a method, system, and computer program product for enhanced consistency in geological risk assessment for detecting recoverable accumulation of hydrocarbons through continuous machine learning.

### PRIOR ART

Geological risk assessment (GRA) is a process in which interpreters, usually geoscientists, assign a Probability of Success (POS) of a given prospect containing a recoverable accumulation of hydrocarbons resulting in a geological success. A prospect is an area of exploration or site in which hydrocarbons have been predicted to exist in an economic quantity. Interpreters often base their GRA rationale on the characterization of geological factors and available supporting data for a given prospect. However, different geoscientists may estimate prospect reserves, profitability, and chances of success without consistent methods. The analyzed data is generally unstructured, demanding manual processing of a varied number of documents. Such processing is a costly and time-consuming task. Furthermore, this process commonly involves subjectivity and results may vary depending on the interpreter's expertise.

Traditionally, petroleum exploration has been carried through four distinct stages. In a first stage, a basin or trend to explore, also called a "play", is defined. In a second state, potential candidates for drilling, or prospects, are identified. In a third stage, each of a prospect's respective values, which include estimating the size of the producible reserves, the chance of hydrocarbon accumulation, and profitability, are measured. A fourth stage includes implementation and management of exploration projects. The fourth stage includes defining acquisition strategies, inventory and portfolio management, and finally carrying out operations. Estimating a prospect's value on the chance of hydrocarbon accumulation is referred to as GRA.

A traditional GRA workflow begins with data acquisition, for instance, seismic data, well data, scientific papers, etc. Experts then use supporting tools to explore and interpret this data, building geological models and identifying potential drilling prospects. The success of such prospects depends upon the existence of a set of petroleum system elements, or geological factors, e.g. trap, seal, reservoir, recovery effectiveness, etc. A risk assessment is then performed to assign a measure called POS, indicating the chance of a given prospect contains a recoverable accumulation of hydrocarbons. The reliability of the POS estimation is highly dependent of the data used. In this sense, multiple methodologies adopt the concept of a Level of Knowledge (LOK) metric to assess data availability, quantity and quality. In addition, some of these methodologies use the LOK metric to constrain a possible range of values to be assigned to the POS. Traditionally, this is an iterative process, i.e., when new data is acquired a revision of the whole process could be necessary.

Chance adequacy matrices and risk-tables are among the main used tools that aid experts in providing POS values for prospects. A chance adequacy matrix defines constraints for POS values depending on a level of uncertainty or LOK of geological models derived from available data and its interpretation. The chance adequacy matrix does not provide guidance on how to characterize each prospect or how to define a LOK level for such prospects. In a risk-table, for each geological factor there is a standard characterization process that defines which cell of the table the prospect is associated with. The particular cell has a fixed probability value that should be used to define the POS value for the geological factor of the corresponding prospect. The final POS of the prospect is a multiplication of all POS values of its geological factors.

Accordingly, GRA is based on the characterization of specific properties of geological factors and the available supporting data for a given prospect. However, risk assessment is commonly carried out without consistent methods. The analyzed data is generally unstructured which results in a costly and time-consuming task. In addition, the risk assessment process involves subjectivity and results vary depending upon the interpreter's expertise. The standard characterization process and the fixed POS values reduce subjectivity but don't provide the necessary flexibility to adapt to new realities, for instance, adapting to new technology or new exploration frontiers.

### SUMMARY OF THE INVENTION

The illustrative embodiments provide a method, system, and computer program product. An embodiment of a computer-implemented method for detection of recoverable accumulations of hydrocarbons based on geological risk assessment includes receiving a first set of geological factors associated with a first site, and retrieving data pertaining to at least one second site with a second set of geological factors similar to first set of geological factors of the first site. The embodiment further includes a comparison of the first set of geological factors to the second set of geological factors, and determining a level of knowledge of the first site based upon the comparison. The embodiment further includes determining a suggested probability of success for the first site based upon the level of knowledge and determining a probability of success for each of the geological factors of the second set of geological factors. The embodiment further includes determining a probability of success for the first site, and assessing the probability of success of the first site based upon the level of knowledge of the first site, the suggested probability of success for the first site, and the probability of success for each of the second set of geological factors, thereby providing a determination of the probability of existence of a certain quantity of recoverable accumulated hydrocarbons in the referred first site.

In another embodiment, the data is retrieved from a knowledge base. Another embodiment further includes updating the knowledge base based on the assessment. Another embodiment further includes receiving unstructured data associated with the second site, converting the unstructured data to structured data, and storing the structured data in the knowledge base. In another embodiment, converting the unstructured data to structured data includes processing the unstructured data using natural language processing techniques.

Another embodiment further includes receiving measurement data associated with the second site, analyzing the measurement data to provide a geological interpretation of the measurement data, and storing the interpreted data in the knowledge base as structured data.

In another embodiment, the comparison is a pair-wise comparison of the first set of geological factors and the second set of geological factors. Another embodiment further includes receiving feedback associated with the assessment of the probability of success of the first site, and adjusting the assessment based on said feedback.

An embodiment includes a computer usable program product. The computer usable program product includes one or more computer-readable storage devices, and program instructions stored on at least one of the one or more storage devices.

An embodiment includes a computer system. The computer system includes one or more processors, one or more computer-readable memories, and one or more computer-readable storage devices, and program instructions stored on at least one of the one or more storage devices for execution by at least one of the one or more processors via at least one of the one or more memories.

### DESCRIPTION OF FIGURES

Certain novel features believed characteristic of the invention are set forth in the appended claims. The invention itself, however, as well as a preferred mode of use, further objectives and advantages thereof, will best be understood by reference to the following detailed description of the illustrative embodiments when read in conjunction with the accompanying drawings, wherein:
Figure 1 depicts a block diagram of a network of data processing systems in which illustrative embodiments may be implemented;
Figure 2 depicts a block diagram of a data processing system in which illustrative embodiments may be implemented;
Figure 3 depicts a block diagram of an exemplary architecture for enhanced consistency in geological risk assessment for detecting recoverable accumulations of hydrocarbons through continuous machine learning in accordance with an illustrative embodiment;
Figure 4 depicts a block diagram of another exemplary architecture for enhanced consistency in geological risk assessment for detecting recoverable accumulations of hydrocarbons through continuous machine learning in accordance with an illustrative embodiment;
Figure 5 depicts an exemplary workflow for geological risk assessment providing the detection of recoverable accumulations of hydrocarbons in accordance with an illustrative embodiment;
Figure 6 depicts an example process for continuous learning in geological factor risk assessment for detecting recoverable accumulations of hydrocarbons in accordance with an illustrative embodiment;
Figure 7 depicts an example process for continuous learning in geological factor characterization in accordance with an illustrative embodiment;
Figure 8 an example process for geological risk reassessment providing detection of recoverable accumulations of hydrocarbons in accordance with an illustrative embodiment;
Figure 9 depicts an example process for geological factor characterization methodology update in accordance with an illustrative embodiment; and
Figure 10 depicts a flowchart of an example process for enhanced consistency in geological risk assessment for detecting recoverable accumulations of hydrocarbons through continuous machine learning in accordance with an illustrative embodiment.

### DETAILED DESCRIPTION

The illustrative embodiments described herein are directed to enhanced consistency in GRA for detecting recoverable accumulations of hydrocarbons through continuous machine learning. One or more embodiments recognize that an existing problem is to develop a flexible geological risk assessment (GRA) methodology that is a repeatable and consistent process that avoid biased evaluations, allowing enhanced consistency in detection of recoverable accumulations of hydrocarbons, .

One or more embodiments are directed to improving the consistency of the risk assessment process which is the base for detecting recoverable accumulations of hydrocarbons by providing contextually relevant information for the activities within the risk assessment in order to decrease bias in the decision-making process about which prospects to drill. One or more embodiments described a system and methodology for structuring geological prospects and providing a fair ranking/comparison between the prospects by the use of an exemplary advisor system based on artificial intelligence techniques to continuously improve decision making support for each GRA phase. In one or more embodiments, a GRA is broken down into basic geological factors. For each geological factor, stages of geological factor characterization, level of knowledge (LOK) assessment, probability of success (POS) assessment, and peer review are performed.

In one or more embodiments, a knowledge base (KB) is used to continuously accumulate and structure domain knowledge obtained from multiple sources, such as data analysis modules and papers, providing evidences for the characterization process. In one or more embodiments, the retrieval and ranking of relevant characterization evidences are used to continuously improve GRA for detecting recoverable accumulations of hydrocarbons by collecting feedback and applying supervised machine learning ranking algorithms.

One or more embodiments provide for a continuous learning process that combines rule-based inference and supervised machine learning methods to establish a fair and consistent ranking of Level of Knowledge based on expert pair-wise comparisons with similar prospects to provide a flexible expert-based ranking of LOK. One or more embodiments provide support to a dynamic characterization methodology that can be adapted and evolve. One or more embodiments provide for assessment tracking supported by a knowledge base, enabling the monitoring of potential resources and concepts that may trigger LOK and POS reassessments.

An embodiment can be implemented as a software application. The application implementing an embodiment can be configured as a modification of an existing system or platform, as a separate application that operates in conjunction with an existing system or platform, a standalone application, or some combination thereof.

The illustrative embodiments are described with respect to certain types of tools and platforms, geological risk assessment procedures and algorithms, services, devices, data processing systems, environments, components, and applications only as examples. Any specific manifestations of these and other similar artifacts are not intended to be limiting to the invention. Any suitable manifestation of these and other similar artifacts can be selected within the scope of the illustrative embodiments.

Furthermore, the illustrative embodiments may be implemented with respect to any type of data, data source, or access to a data source over a data network. Any type of data storage device may provide the data to an embodiment of the invention, either locally at a data processing system or over a data network, within the scope of the invention. Where an embodiment is described using a mobile device, any type of data storage device suitable for use with the mobile device may provide the data to such embodiment, either locally at the mobile device or over a data network, within the scope of the illustrative embodiments.

The illustrative embodiments are described using specific code, designs, architectures, protocols, layouts, schematics, and tools only as examples and are not limiting to the illustrative embodiments. Furthermore, the illustrative embodiments are described in some instances using particular software, tools, and data processing environments only as an example for the clarity of the description. The illustrative embodiments may be used in conjunction with other comparable or similarly purposed structures, systems, applications, or architectures. For example, other comparable mobile devices, structures, systems, applications, or architectures therefor, may be used in conjunction with such embodiment of the invention within the scope of the invention. An illustrative embodiment may be implemented in hardware, software, or a combination thereof.

The examples in this disclosure are used only for the clarity of the description and are not limiting to the illustrative embodiments. Additional data, operations, actions, tasks, activities, and manipulations will be conceivable from this disclosure and the same are contemplated within the scope of the illustrative embodiments.

Any advantages listed herein are only examples and are not intended to be limiting to the illustrative embodiments. Additional or different advantages may be realized by specific illustrative embodiments. Furthermore, a particular illustrative embodiment may have some, all, or none of the advantages listed above.

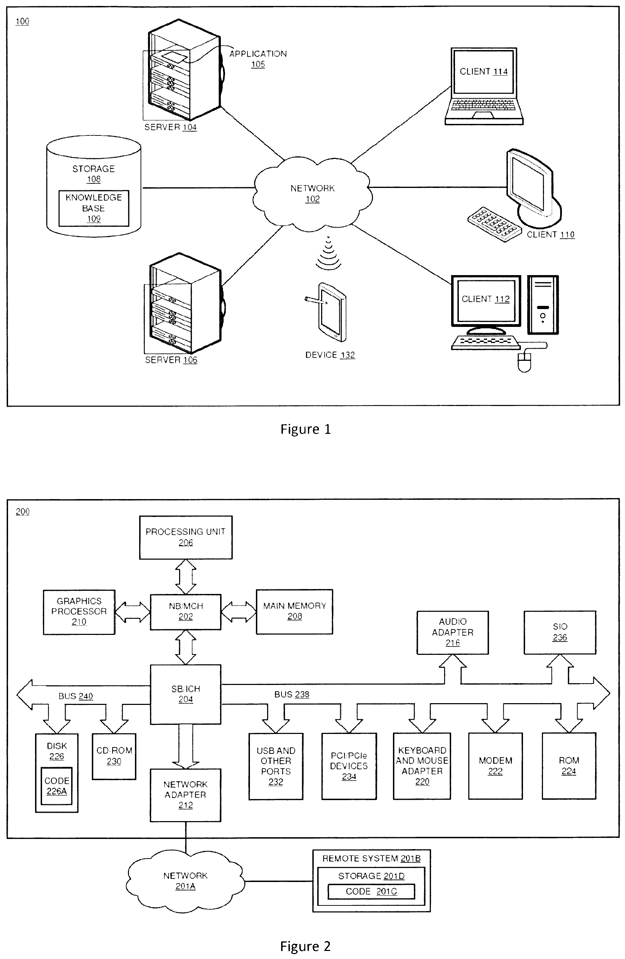

With reference to the figures and in particular with reference to **Figures 1** and **2**, these figures are example diagrams of data processing environments in which illustrative embodiments may be implemented. **Figures 1** and **2** are only examples and are not intended to assert or imply any limitation with regard to the environments in which different embodiments may be implemented. A particular implementation may make many modifications to the depicted environments based on the following description.

**Figure 1** depicts a block diagram of a network of data processing systems in which illustrative embodiments may be implemented. Data processing environment **100** is a network of computers in which the illustrative embodiments may be implemented. Data processing environment **100** includes network **102.** Network **102** is the medium used to provide communications links between various devices and computers connected together within data processing environment **100.** Network **102** may include connections, such as wire, wireless communication links, or fiber optic cables.

Clients or servers are only example roles of certain data processing systems connected to network **102** and are not intended to exclude other configurations or roles for these data processing systems. Server **104** and server **106** couple to network **102** along with storage unit **108.** Software applications may execute on any computer in data processing environment **100**. Clients **110**, **112**, and **114** are also coupled to network **102**. A data processing system, such as server **104** or **106**, or client **110**, **112**, or **114** may contain data and may have software applications or software tools executing thereon.

Only as an example, and without implying any limitation to such architecture, **Figure 1** depicts certain components that are usable in an example implementation of an embodiment. For example, servers **104** and **106**, and clients **110**, **112**, **114**, are depicted as servers and clients only as example and not to imply a limitation to a client-server architecture. As another example, an embodiment can be distributed across several data processing systems and a data network as shown, whereas another embodiment can be implemented on a single data processing system within the scope of the illustrative embodiments. Data processing systems **104**, **106**, **110**, **112**, and **114** also represent example nodes in a cluster, partitions, and other configurations suitable for implementing an embodiment.

Device **132** is an example of a device described herein. For example, device **132** can take the form of a smartphone, a tablet computer, a laptop computer, client **110** in a stationary or a portable form, a wearable computing device, or any other suitable device. Any software application described as executing in another data processing system in **Figure 1** can be configured to execute in device **132** in a similar manner. Any data or information stored or produced in another data processing system in **Figure 1** can be configured to be stored or produced in device **132** in a similar manner.

Servers **104** and **106**, storage unit **108**, and clients **110**, **112**, and **114**, and device **132** may couple to network **102** using wired connections, wireless communication protocols, or other suitable data connectivity. Clients **110**, **112**, and **114** may be, for example, personal computers or network computers.

In the depicted example, server **104** may provide data, such as boot files, operating system images, and applications to clients **110**, **112,** and **114.** Clients **110**, **112**, and **114** may be clients to server **104** in this example. Clients **110**, **112**, **114**, or some combination thereof, may include their own data, boot files, operating system images, and applications. Data processing environment **100** may include additional servers, clients, and other devices that are not shown. Server **104** includes an application **105** that may be configured to implement one or more of the functions described herein for enhanced consistency in GRA for detecting recoverable accumulations of hydrocarbons through continuous machine learning as described herein in accordance with one or more embodiments. Storage device **108** includes one or more knowledge bases **109** configured to store data associated with prospects, geological factors, facts and statements as subject-predicate-object (SPO) triples and references to unstructured data.

In the depicted example, data processing environment **100** may be the Internet. Network **102** may represent a collection of networks and gateways that use the Transmission Control Protocol/Internet Protocol (TCP/IP) and other protocols to communicate with one another. At the heart of the Internet is a backbone of data communication links between major nodes or host computers, including thousands of commercial, governmental, educational, and other computer systems that route data and messages. Of course, data processing environment **100** also may be implemented as a number of different types of networks, such as for example, an intranet, a local area network (LAN), or a wide area network (WAN). **Figure 1** is intended as an example, and not as an architectural limitation for the different illustrative embodiments.

Among other uses, data processing environment **100** may be used for implementing a client-server environment in which the illustrative embodiments may be implemented. A client-server environment enables software applications and data to be distributed across a network such that an application functions by using the interactivity between a client data processing system and a server data processing system. Data processing environment **100** may also employ a service-oriented architecture where interoperable software components distributed across a network may be packaged together as coherent business applications. Data processing environment **100** may also take the form of a cloud, and employ a cloud computing model of service delivery for enabling convenient, on-demand network access to a shared pool of configurable computing resources (e.g. networks, network bandwidth, servers, processing, memory, storage, applications, virtual machines, and services) that can be rapidly provisioned and released with minimal management effort or interaction with a provider of the service.

With reference to **Figure 2**, this figure depicts a block diagram of a data processing system in which illustrative embodiments may be implemented. Data processing system **200** is an example of a computer, such as servers **104** and **106**, or clients **110**, **112**, and **114** in **Figure 1**, or another type of device in which computer usable program code or instructions implementing the processes may be located for the illustrative embodiments.

Data processing system **200** is also representative of a data processing system or a configuration therein, such as data processing system **132** in **Figure 1** in which computer usable program code or instructions implementing the processes of the illustrative embodiments may be located. Data processing system **200** is described as a computer only as an example, without being limited thereto. Implementations in the form of other devices, such as device **132** in **Figure 1**, may modify data processing system **200**, such as by adding a touch interface, and even eliminate certain depicted components from data processing system **200** without departing from the general description of the operations and functions of data processing system **200** described herein.

In the depicted example, data processing system **200** employs a hub architecture including North Bridge and memory controller hub (NB/MCH) **202** and South Bridge and input/output (I/O) controller hub (SB/ICH) **204.** Processing unit **206**, main memory **208**, and graphics processor **210** are coupled to North Bridge and memory controller hub (NB/MCH) **202.** Processing unit **206** may contain one or more processors and may be implemented using one or more heterogeneous processor systems. Processing unit **206** may be a multi-core processor. Graphics processor **210** may be coupled to NB/MCH **202** through an accelerated graphics port (AGP) in certain implementations.

In the depicted example, local area network (LAN) adapter **212** is coupled to South Bridge and I/O controller hub (SB/ICH) **204.** Audio adapter **216**, keyboard and mouse adapter **220**, modem **222**, read only memory (ROM) **224**, universal serial bus (USB) and other ports **232**, and PCI/PCIe devices **234** are coupled to South Bridge and I/O controller hub **204** through bus **238.** Hard disk drive (HDD) or solid-state drive (SSD) **226** and CD-ROM **230** are coupled to South Bridge and I/O controller hub **204** through bus **240.** PCI/PCIe devices **234** may include, for example, Ethernet adapters, add-in cards, and PC cards for notebook computers. PCI uses a card bus controller, while PCIe does not. ROM **224** may be, for example, a flash binary input/output system (BIOS). Hard disk drive **226** and CD-ROM **230** may use, for example, an integrated drive electronics (IDE), serial advanced technology attachment (SATA) interface, or variants such as external-SATA (eSATA) and micro- SATA (mSATA). A super I/O (SIO) device **236** may be coupled to South Bridge and I/O controller hub (SB/ICH) **204** through bus **238.**

Memories, such as main memory **208**, ROM **224**, or flash memory (not shown), are some examples of computer usable storage devices. Hard disk drive or solid-state drive **226**, CD-ROM **230**, and other similarly usable devices are some examples of computer usable storage devices including a computer usable storage medium.

An operating system runs on processing unit **206.** The operating system coordinates and provides control of various components within data processing system **200** in **Figure 2****.** The operating system may be a commercially available operating system for any type of computing platform, including but not limited to server systems, personal computers, and mobile devices. An object-oriented or other type of programming system may operate in conjunction with the operating system and provide calls to the operating system from programs or applications executing on data processing system **200.**

Instructions for the operating system, the object-oriented programming system, and applications or programs, such as application **105** in **Figure 1**, are located on storage devices, such as in the form of code **226A** on hard disk drive **226**, and may be loaded into at least one of one or more memories, such as main memory **208**, for execution by processing unit **206.** The processes of the illustrative embodiments may be performed by processing unit **206** using computer implemented instructions, which may be located in a memory, such as, for example, main memory **208**, read only memory **224**, or in one or more peripheral devices.

Furthermore, in one case, code **226A** may be downloaded over network **201A** from remote system **201B**, where similar code **201C** is stored on a storage device **201D.** in another case, code **226A** may be downloaded over network **201A** to remote system **201B**, where downloaded code **201C** is stored on a storage device **201D.**

The hardware in **Figures 1-2** may vary depending on the implementation. Other internal hardware or peripheral devices, such as flash memory, equivalent non-volatile memory, or optical disk drives and the like, may be used in addition to or in place of the hardware depicted in **Figures 1-2****.** In addition, the processes of the illustrative embodiments may be applied to a multiprocessor data processing system.

In some illustrative examples, data processing system **200** may be a personal digital assistant (PDA), which is generally configured with flash memory to provide non-volatile memory for storing operating system files and/or user-generated data. A bus system may comprise one or more buses, such as a system bus, an I/O bus, and a PCI bus. Of course, the bus system may be implemented using any type of communications fabric or architecture that provides for a transfer of data between different components or devices attached to the fabric or architecture.

A communications unit may include one or more devices used to transmit and receive data, such as a modem or a network adapter. A memory may be, for example, main memory **208** or a cache, such as the cache found in North Bridge and memory controller hub **202.** A processing unit may include one or more processors or CPUs.

The depicted examples in **Figures 1-2** and above-described examples are not meant to imply architectural limitations. For example, data processing system **200** also may be a tablet computer, laptop computer, or telephone device in addition to taking the form of a mobile or wearable device.

Where a computer or data processing system is described as a virtual machine, a virtual device, or a virtual component, the virtual machine, virtual device, or the virtual component operates in the manner of data processing system **200** using virtualized manifestation of some or all components depicted in data processing system **200.** For example, in a virtual machine, virtual device, or virtual component, processing unit **206** is manifested as a virtualized instance of all or some number of hardware processing units **206** available in a host data processing system, main memory **208** is manifested as a virtualized instance of all or some portion of main memory **208** that may be available in the host data processing system, and disk **226** is manifested as a virtualized instance of all or some portion of disk **226** that may be available in the host data processing system. The host data processing system in such cases is represented by data processing system **200.**

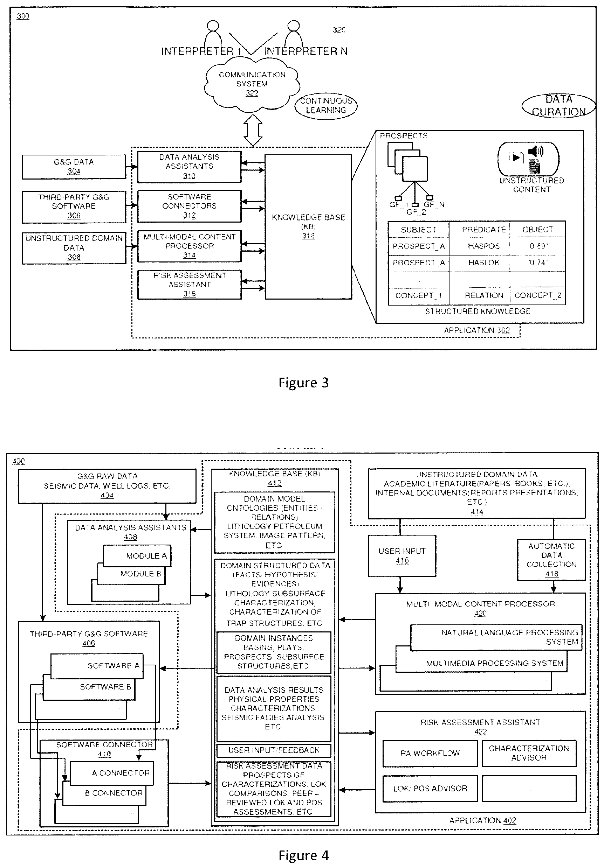

With reference to **Figure 3**, this figure depicts a block diagram of an exemplary architecture **300** for enhanced consistency in GRA for detecting recoverable accumulations of hydrocarbons through continuous machine learning in accordance with an illustrative embodiment. The example embodiment includes an application **302.** In a particular embodiment, application **302** is an example of application **105** of **Figure 1**.

In the embodiment, application **302** receives geological and geophysical (G&G) data raw data **304**, third-party G&G software inputs **306,** and unstructured domain data **308.** In particular embodiments, G&G raw data **304** includes measurement data associated with one or more prospects captured from sources such as seismic data and well data from exploration activity, third-party G&G software inputs **306** include geological factors and other data received from third-party G&G software tools, and unstructured domain data **308** includes scientific papers and other unstructured data containing information useful for making risk assessment decisions.

Application **302** includes data analysis assistants **310**, software connectors **312**, multi-modal content processor **314**, risk assessment assistant **316**, and a knowledge base (KB) **318.** Data analysis assistants **310** are configured to provide geological interpretation of G&G raw data **304** and provides the interpreted G&G raw data to knowledge base **318** as structured data. Software connectors **312** are configured to translate analysis performed in third-party software **306** or other analysis tools to an ontology of KB **318** as structured knowledge in which the ontology encompasses a representation, organization, and relationship of data within KB **318.** Multi-modal content processor **314** parses and extracts relevant domain content information from unstructured domain data **308** in a number of different formats and provides the processed domain content information to KB **318** as structured knowledge. Risk assessment assistant **316** uses this accumulated structured knowledge to support the GRA procedures for enhancing consistency in the detection of recoverable accumulations of hydrocarbons described herein.

In one or more embodiments, KB **318** stores information about prospects and associated geological factors (GF_1..GF_N), facts and statements as SPO triples, and references to unstructured data that may be connected or associated with one or more prospects. In one or more embodiments, the prospect data is constantly refined and curated by users, making it as consistent as possible in the long run. In one or more embodiments, a plurality of interpreters (Interpreter 1...Interpreter N) **320** may access application **302** via communication system **322** to retrieve risk assessments associated with one or more prospects from **KB 318** and review the risk assessments to provide peer feedback for the risk assessments, which is the base for the detection of recoverable accumulations of hydrocarbons. In particular embodiments, communications system **332** includes network **102** of **Figure 1****.**

With reference to **Figure 4**, this figure depicts a block diagram of another exemplary architecture **400** for enhanced consistency in GRA for detecting recoverable accumulations of hydrocarbons through continuous machine learning in accordance with an illustrative embodiment. The example embodiment includes an application **402.** In a particular embodiment, application **402** is an example of application **105** of **Figure 1**.

In the embodiment, application **402** receives geological and geophysical (G&G) data raw data **404**, third-party G&G software inputs **406**, and unstructured domain data **414.** In particular embodiments, G&G raw data **404** includes data associated with one or more prospects captured from sources such as seismic data and well data from exploration activity, third-party G&G software inputs **406** include geological factors and other data received from one or more third-party G&G software tools (software A, Software B,...), and unstructured domain data **414** includes academic literature (such as academic papers, books, etc.) and other unstructured data containing information useful for making risk assessment decisions, for detecting recoverable accumulations of hydrocarbons.

Application **402** includes data analysis assistants **408**, software connectors **410**, KB **412**, user input component **416**, automatic data collection component **418**, multi-modal content processor **420**, risk assessment assistant **422.** Data analysis assistants **408** include one or more modules configured to provide geological interpretation of G&G raw data **404** and provides the interpreted G&G raw data to knowledge base **412** as domain structured data. Software connectors **410** include one or more connectors configured to translate analysis performed in third-party software **406** or other analysis tools to an ontology of KB **412** as domain structured data.

In the embodiment, KB **412** includes domain model ontologies defining entities and relationships for the domain structured data. In particular embodiments, the domain model ontologies include lithology, petroleum system, and image pattern ontologies relating entities found within G&G raw data **404** usable to perform risk analysis for detecting recoverable accumulations of hydrocarbons. KB **412** further includes domain structured data which includes facts, hypotheses, and evidences such as lithology subsurface characterization and trap structure characterizations. The domain structured data further includes domain instances such basins, plays, prospects, and subsurface structures. The domain structured data further includes data analysis results such as physical properties characterizations, and seismic facies analysis. The domain structured data further includes user input/feedback data and risk assessment data. In particular embodiments, the risk assessment data includes prospect geological factor characterizations, LOK comparisons, and peer-reviewed LOK and POS assessments.

Multi-modal content processor **420** is configured to receive unstructured domain data **414** via one or more of user input component **416** or automatic data collection component **418** and process unstructured domain data **414** to produce domain structured data. Multi-modal content processor **420** further stores the domain structured data in KB **412.** In one or more embodiments, multi-modal content processor **420** processes unstructured domain data **414** using one or more of a natural language processing (NLP) system and a multimedia processing system to parse and extract content from unstructured domain data **414** and convert the content to domain structure data. Risk assessment assistant **422** includes a risk assessment workflow component configured to generate a risk assessment workflow, a characterization advisor component configured to characterize geological factors associated with one or more prospects, and a LOK/POS advisor component to assess LOK and POS values of the one or more prospects.

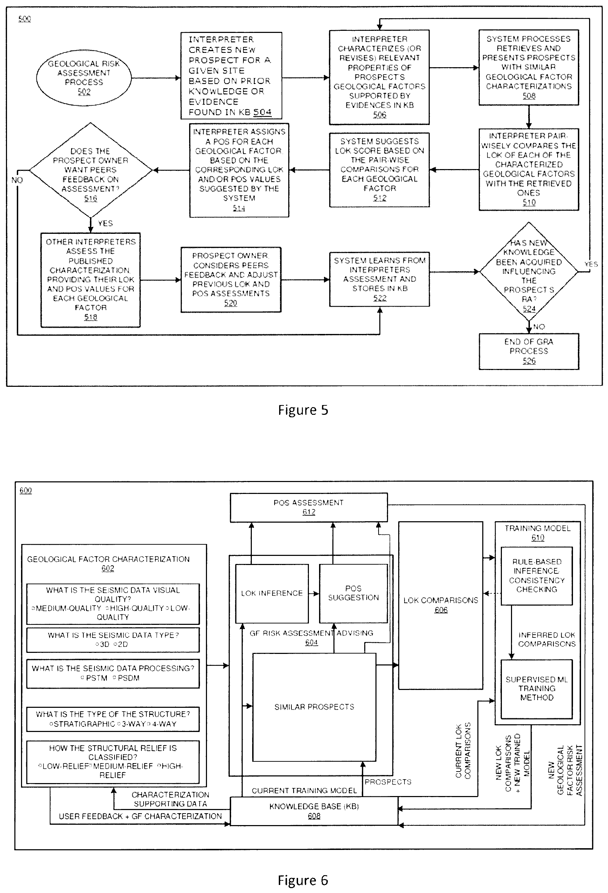

With reference to **Figure 5**, this figure depicts an exemplary workflow **500** for GRA in accordance with an illustrative embodiment. In block **502**, a GRA process for detecting recoverable accumulations of hydrocarbons, is initiated by a system implemented by application **402.** In block **504**, an interpreter creates a new prospect for a given site. In block **506**, the interpreter characterizes or revises relevant properties of the prospect's geological factors supported by evidences in KB **412.** In block **508**, the system processes and retrieves prospects with similar geological factor characterizations as the given site from KB **412** to the interpreter, and presents the prospects with similar geological factor characterizations to the interpreter. In block **510**, the interpreter performs a pair-wise comparison of the LOK of each geological factor characterized by the interpreter with the retrieved geological factors of the prospects.

In block **512**, the system suggests a LOK score based on the pair-wise comparison for each geological factor. In block **514**, the interpreter assigns a POS for each geological factor based upon the corresponding LOK and POS values suggested by the system. In block **516**, the interpreter determines whether the interpreter wants peer feedback on the interpreter's assessment. If the interpreter does not desire peer feedback, workflow **500** continues to block **522** as further described herein.

If the interpreter desires peer feedback, in block **518** other interpreters or users assess the published characterization, providing their own LOK and POS estimates for each geological factor. In block **520**, the prospect owner interpreter receives peer assessments feedback, and adjusts the interpreter's estimates based on the peer assessments feedback. In block **522**, the system learns from the interpreter's assessment and stores the interpreter's assessment in KB **412** as domain structured data.

In block **524**, the system determines if new knowledge has been acquired that could potentially influence the prospect's risk assessment such as the receiving of new raw data or unstructured data. If new knowledge has been acquired, workflow **500** returns to block **506** to trigger a characterization revision by the interpreter. If no new knowledge has been acquired, the risk assessment is considered stable and workflow **500** continues to block **526.** In block **526**, the GRA process ends. In particular embodiments, the system computes a profitability estimation on the new prospect based upon the GRA as a next stage of a petroleum exploration workflow.

With reference to **Figure** 6, this figure depicts an example process **600** for continuous learning in geological factor risk assessment, for detecting recoverable accumulations of hydrocarbons, in accordance with an illustrative embodiment. **Figure 6** illustrates a process of LOK and POS assessments for a particular geological factor of a given prospect. In block **602**, an expert (e.g., an interpreter or other subject-matter expert) characterizes a geological factor using a user interface. In a particular embodiment, the system presents the expert with a series of questions to enable the expert to characterize the geological factor. Example questions may include: asking the expert "What is the seismic data visual quality?" and the expert may answer one of "MEDIUM-QUALITY", "HIGH-QUALITY" and "LOW-QUALITY"; asking the expert "What is the seismic data type?" and the expert may answer one of "3D" and "2D"; asking the expert "What is the seismic data processing?" and the expert may answer one or "PSTM" or "PSDM"; asking the expert "What is the type of the structure?" and the expert may answer one of "stratigraphic", "3-way" or "4-way"; and asking the expert "How the structural relief is classified?" and the expert may answer one of "low-relief", "medium-relief", or "high-relief".

In a GF risk assessment advising block **604**, the system retrieves a set of prospects with similar characterization to be used as reference for the assessment. In a LOK comparison block **606**, the expert pair-wise compares the LOK of the prospect to the LOKs of the similar prospects. For each similar prospect, the expert evaluates the prospects characterization and related evidences, giving feedback whether the prospect has a higher, lower or similar LOK. In a training model block **610**, the system retrieves previous comparisons stored in

KB **608** and use rule-based inference to detect and warn the expert of possible inconsistencies with the provided comparisons. The system uses explicit and inferred comparisons to train a machine learning (ML) model that given a characterization and its evidences outputs a corresponding LOK score consistent to the experts' comparisons.

Training model block **610** outputs new LOK comparisons and a new trained model to KB **608.** The model is then used to infer the LOK score of the current prospect characterization. Along with this LOK inference, the system also provides a suggestion of a POS consistent with the corresponding LOK scale. The system also takes into account previous assessments and other relevant information from similar prospects, such as successful drilling results. In POS assessment block **612**, experts assess the geological factor POS constrained to the range of values defined by the current inferred LOK and provides a new geological factor risk assessment to KB **608.** As more feedback and knowledge are provide to KB **608**, the assessment advising process is continuously enhanced.

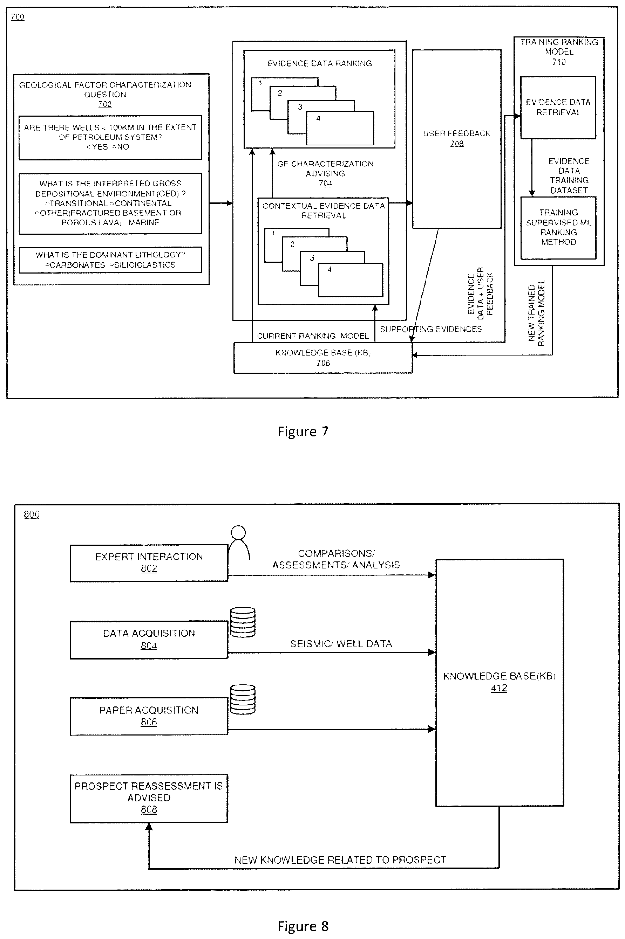

With reference to **Figure 7**, this figure depicts an example process **700** for continuous learning in geological factor characterization in accordance with an illustrative embodiment. In a geological factor characterization question block **702**, the system presents a questionnaire for each geological factor, capturing relevant properties that may influence the POS measure.

Example questions for the questionnaire may include: asking the expert "Are there wells < 100 KM in the extent of the petroleum system?" and the expert may answer one of "YES" or "NO"; asking the expert "What is the interpreted gross depositional environment (GED)?" and the expert may answer one of "transitional", "continental" or "other (fractured basement or porous lava) marine"; and asking the expert "What is the dominant lithography?" and the expert may answer one or "carbonates" or "siliciclastics".

GF characterization advising block **704** supports experts by retrieving and ranking contextual evidence data related to concepts present in each question based upon a current ranking model and supporting evidences retrieved from KB **706.** These evidences include structured knowledge in KB **706** such as seismic data analyses, facts extracted from papers, expert annotations, etc. After retrieving these evidences, experts can provide user feedback **708** about the relevance of such advice. The system uses this user feedback **708** to train a recommendation ranking model **710** using a supervised machine learning (ML) ranking method. Training ranking model **710** provides a new ranking model to KB **706.** As more feedback and knowledge are fed to KB **706**, the characterization advising process is continuously enhanced.

With reference to **Figure 8**, this figure depicts an example process **800** for GRA for detecting recoverable accumulations of hydrocarbons, in accordance with an illustrative embodiment. Since knowledge is structured in KB **412**, the system is able to monitor relevant changes regarding concepts and resources and trigger new LOK and POS assessments for a site. New resources in the form of expert interaction **802** to providing new pair-wise LOK comparisons, new assessments, and data analysis, data acquisition **804** providing seismic or well data, and paper acquisition **806** providing new papers related to a given prospect. As a result of receiving new knowledge related to a prospect, the system triggers an advisement for a prospect reassessment **808.**

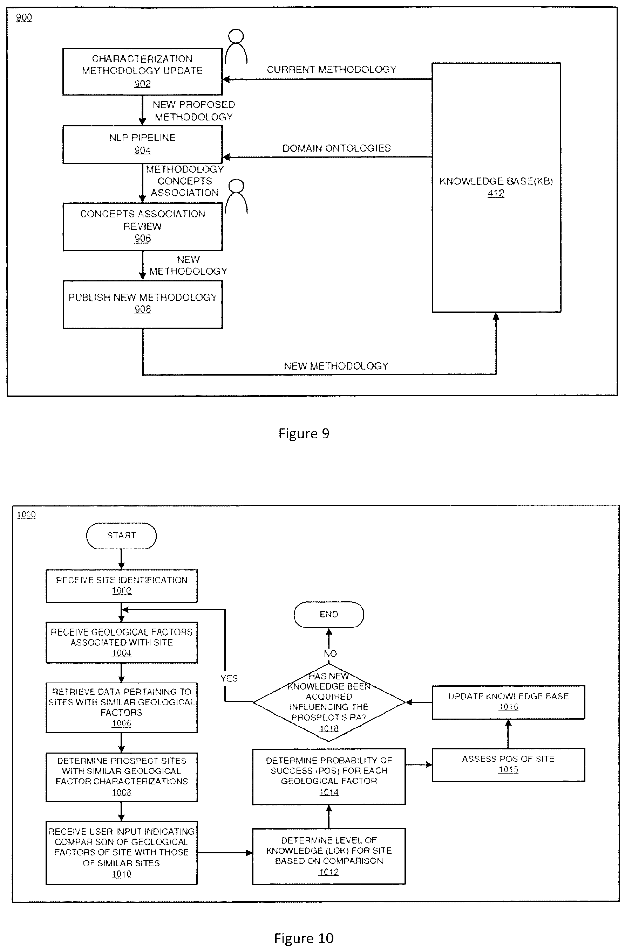

With reference to **Figure 9**, this figure depicts an example process **900** for geological factor characterization methodology update in accordance with an illustrative embodiment. Traditionally, characterization methodologies of geological factors are fixed. However, technology evolution or new exploration frontiers may require an adaptation of such methodologies. One or more embodiments provide for updating relationships among questions and answers with the domain concepts mapped in the KB ontologies. In a characterization methodology update block **902**, an expert proposes a new methodology by changing the questionnaire or aspects of the ontology in KB **412.** An NLP pipeline **904** processes the proposed changes of the geological factor characterization methodology and automatically extracts concepts and relationships of this new methodology using the domain ontologies represented in KB **412.** In a concepts association review block **906**, the expert reviews the extracted associations. In block **908**, the expert publishes the new methodology and the new methodology is stored in KB **412.**

With reference to **Figure 10**, this figure depicts a flowchart of an example process **1000** for enhanced consistency in GRA for detecting recoverable accumulations of hydrocarbons through continuous machine learning in accordance with an illustrative embodiment. In block **1002**, application **105** receives a site identification of a prospect for which GRA is to be performed. In block **1004**, application **105** receives geological factors associated with the site from a user such as an interpreter or other expert. In block **1006**, application **105** retrieves data pertaining to site with similar geological factors from a knowledge base such as knowledge base **109** or **412.**

In block **1008**, application **105** determines prospect sites with similar geological factor characterizations. In block **1010**, application **105** receives user input from the user indicating a pair-wise comparison of geological factors of the site with those of the similar sites. In block **1012**, application **105** determines a level of knowledge (LOK) for the site based upon the comparison and determines a suggested POS for the site based upon the LOK. In block **1014**, application **105** determines a probability of success (POS) for each geological factor of the similar sites. In block **1015**, application **105** determines a probability of success for the site, and assesses the probability of success of the site based upon the level of knowledge of the site, the suggested probability of success for the site, and the probability of success for each of the geological factors the similar sites to produce a GRA of the site, thereby providing a determination of the probability of existence of a certain quantity of recoverable accumulated hydrocarbons in the referred site.

In block **1016**, application **105** updates the knowledge base based upon the POS assessment. In block **1018**, application **105** determines whether new knowledge has been acquired that will potentially influence the GRA of the site. If new knowledge has been acquired, process **1000** returns to block **1004.** If no knowledge has been acquired that will potentially affect the GRA of the site, process **1000** then ends.

Thus, a computer implemented method, system or apparatus, and computer program product are provided in the illustrative embodiments for enhanced consistency in GRA for detecting recoverable accumulations of hydrocarbons through continuous machine learning in accordance with an illustrative embodiment and other related features, functions, or operations. Where an embodiment or a portion thereof is described with respect to a type of device, the computer implemented method, system or apparatus, the computer program product, or a portion thereof, are adapted or configured for use with a suitable and comparable manifestation of that type of device.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A computer-implemented method for geological risk assessment for detecting recoverable accumulations of hydrocarbons, the method comprising:
- receiving a first set of geological factors associated with a first site;
- retrieving data pertaining to at least one second site with a second set of geological factors similar to first set of geological factors of the first site;
- receiving a user input indicating a comparison of the first set of geological factors to the second set of geological factors;
- determining a level of knowledge of the first site based upon the comparison;
- determining a suggested probability of success for the first site based upon the level of knowledge;
- determining a probability of success for each of the geological factors of the second set of geological factors;
- determining a probability of success for the first site; and
- assessing the probability of success of the first site in the existence of a quantity of recoverable accumulated hydrocarbons based upon the level of knowledge of the first site, the suggested probability of success for the first site, and the probability of success for each of the second set of geological factors.

2. The method of claim 1, wherein the data is retrieved from a knowledge base; the method further comprising updating the knowledge base based on the assessment.

3. The method of claim 2, further comprising:
- receiving unstructured data associated with the second site;
- converting the unstructured data to structured data; and
- storing the structured data in the knowledge base.

4. The method of claim 3, wherein converting the unstructured data to structured data includes processing the unstructured data using natural language processing techniques.

5. The method of any of the claims 2-4, further comprising:
- receiving measurement data associated with the second site;
- analyzing the measurement data to provide a geological interpretation of the measurement data; and
- storing the interpreted data in the knowledge base as structured data.

6. The method of claim any of the preceding claims, wherein the comparison is a pair-wise comparison of the first set of geological factors and the second set of geological factors.

7. The method of claim any of the preceding claims, further comprising:
- receiving feedback associated with the assessment of the probability of success of the first site; and
- adjusting the assessment based on the feedback.

8. A computer usable program product comprising one or more computer-readable storage devices, and program instructions stored on at least one of the one or more storage devices, the stored program instructions comprising:
- program instructions to receive a first set of geological factors associated with a first site;
- program instructions to retrieve data pertaining to at least one second site with a second set of geological factors similar to first set of geological factors of the first site;
- program instructions to receive a user input indicating a comparison of the first set of geological factors to the second set of geological factors;
- program instructions to determine a level of knowledge of the first site based upon the comparison;
- program instructions to determine a suggested probability of success for the first site based upon the level of knowledge;
- program instructions to determine a probability of success for each of the geological factors of the second set of geological factors;
- program instructions to determine a probability of success for the first site; and
- program instructions to assess the probability of success of the first site in the existence of a quantity of recoverable accumulated hydrocarbons based upon the level of knowledge of the first site, the suggested probability of success for the first site, and the probability of success for each of the second set of geological factors.

9. The computer usable program product of claim 8, wherein the data is retrieved from a knowledge base; the computer usable program product further comprising:
- program instructions to update the knowledge base based on the assessment.

10. The computer usable program product of claim 9, further comprising:
- program instructions to receive unstructured data associated with the second site;
- program instructions to convert the unstructured data to structured data; and
- program instructions to store the structured data in the knowledge base.

11. The computer usable program product of claim 10, wherein converting the unstructured data to structured data includes processing the unstructured data using natural language processing techniques.

12. The computer usable program product of any of the claims 8-11, further comprising:
- program instructions to receive measurement data associated with the second site;
- program instructions to analyze the measurement data to provide a geological interpretation of the measurement data; and
- program instructions to store the interpreted data in the knowledge base as structured data.

13. The computer usable program product of any of the claims 8-12, wherein the comparison is a pair-wise comparison of the first set of geological factors and the second set of geological factors.

14. The computer usable program product of any of the claims 8-13, further comprising:
- program instructions to receive feedback associated with the assessment of the probability of success of the first site from one or more other users; and
- program instructions to adjust the assessment based on the feedback.

15. The computer usable program product of any of the claims 10-14, wherein:
the computer usable code is stored in a computer readable storage device in a data processing system, and wherein the computer usable code is transferred over a network from a remote data processing system; or
the computer usable code is stored in a computer readable storage device in a server data processing system, and wherein the computer usable code is downloaded over a network to a remote data processing system for use in a computer readable storage device associated with the remote data processing system.
